# EUROPEAN PATENT SPECIFICATION

(11) **EP 1 231 539 B1**
(45) Date of publication and mention of the grant of the patent: **08.03.2006**
(21) Application number: 01310662.0
(22) Date of filing: 20.12.2001
(51) Int. Cl.: G06F 12/08

(54) **Cache memory system**
Pufferspeichersystem
Système d'antémémoire

(30) Priority: 13.02.2001 JP 2001035175
(43) Date of publication of application: 14.08.2002
(73) Proprietor: FUJITSU LIMITED, Kawasaki-shi, Kanagawa 211-8588 (JP)
(72) Inventor: Hayakawa, Fumihiko, c/o Fujitsu Limited, Kawasaki-shi, Kanagawa 211-8588 (JP); Okano, Hiroshi, c/o Fujitsu Limited, Kawasaki-shi, Kanagawa 211-8588 (JP)
(74) Representative: Stebbing, Timothy Charles

(56) References cited:
- US-A- 5 014 195
- US-A- 5 860 127
- BALASUBRAMONIAN R ET AL: "MEMORY HIERARCHY RECONFIGURATION FOR ENERGY AND PERFORMANCE IN GENERAL-PURPOSE PROCESSOR ARCHITECTURES" MICRO-33. PROCEEDINGS OF THE 33RD. ANNUAL ACM/IEEE INTERNATIONAL SYMPOSIUM ON MICROARCHITECTURE. MONTEREY, CA, DEC. 10 - 13, 2000, PROCEEDINGS OF THE ANNUAL ACM/IEEE INTERNATIONAL SYMPOSIUM ON MICROARCHITECTURE, LOS ALAMITOS, CA: IEEE COMP. SOC, US, 10 December 2000 (2000-12-10), pages 245-257, XP001004225 ISBN: 0-7695-0924-X

## Description

The present invention relates to a cache memory system.

In a data arithmetic processing unit including therein a cache memory system such as a microprocessor, possible architectures of the cache memory system include a set associative constitution or a direct map constitution. For a given memory capacity, since the cache memory system of the set associative constitution has a higher hit ratio (hit rate) than that of a cache memory of the direct map constitution, it is expected that the performance of the arithmetic processing unit is improved. The set associative constitution has, however, a disadvantage of high power consumption.

The constitution of a conventional cache memory system of a set associative constitution will be described. It is noted that description will be given to a cache memory system having a 4-way constitution, a cache memory capacity of 16 Kbytes, a cache memory line size of 64 bytes and the number of the entries of each way of 64.

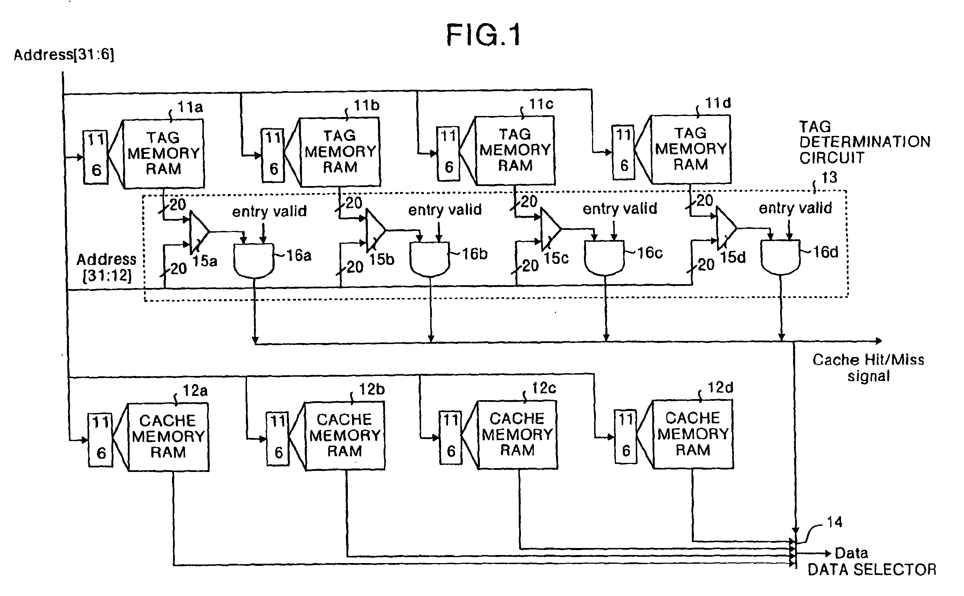

Fig. 1 is a block diagram showing a conventional cache memory system of a set associative constitution. Because of its 4-way constitution, this cache memory system has four tag memory RAM modules 11a, 11b, 11c and 11d connected in parallel and four cache memory RAM modules 12a, 12b, 12c and 12d connected in parallel. In addition, the cache memory system has a tag determination circuit 13 and a data selector 14. The tag determination circuit 13 consists of four comparators 15a, 15b, 15c and 15d and four AND circuits 16a, 16b, 16c and 16d.

The tag memory RAM modules 11a, 11b, 11c and 11d store data indicating the addresses of data stored in the corresponding cache memory RAM modules 12a, 12b, 12c and 12d and entry valid flags (entry valid) indicating whether or not the address data are valid, respectively.

The cache memory RAM modules 12a, 12b, 12c and 12d store data used in arithmetic processing or the like performed by a processor core or the like, not shown, respectively. Each of the tag memory RAM modules 11a, 11b, 11c and 11d and the cache memory RAM modules 12a, 12b, 12c and 12d has a function of turning all or part of itself (i.e. the entire RAM module or a part of a data input/output circuit in the RAM module) into a low consumption power state.

The tag determination circuit 13 compares an address value requested by the processor core or the like (which address value will be referred to as "request address" hereinafter) with address data read from each of the tag memory RAM modules 11a, 11b, 11c and 11d, and determines whether they are coincident or not. The respective comparators 15a, 15b, 15c and 15d of the tag determination circuit 13 compare the request address with the address data, and make determinations.

The data selector 14 selects only valid data from among the data read from each of the cache memory RAM modules 12a, 12b, 12c and 12d and outputs the selected data to a data bus. The respective AND circuits 16a, 16b, 16c and 16d in the tag determination circuit 13 output control signals for allowing the data selector 14 to select valid data based on their entry valid flags. Namely, the data selector 14 selects valid data based on the control signals outputted from the AND circuits 16a, 16b, 16c and 16d, respectively.

The function of the conventional cache memory system shown in Fig. 1 will be described. First, the function thereof at the time of reading data will be described. When the request address of read data is input from the processor core or the like, address data corresponding to the request address and entry valid flags corresponding to the address data are read from the tag memory RAM modules 11a, 11b, 11c and 11d, respectively. The corresponding comparators 15a, 15b, 15c and 15d compare the address data thus read with the request address and determine whether or not the read address data are coincident with the request address, respectively.

The determination results of each of the comparators 15a, 15b, 15c and 15d as well as the entry valid flags of the corresponding ways are input into the corresponding AND circuits 16a, 16b, 16c and 16d, respectively. The outputs of each of the AND circuits 16a, 16b, 16c and 16d are supplied, as control signals for the data selector 14, to the data selector 14. Based on the control signals, only the way storing the address data determined to be coincident with the request address and to be valid by the entry valid flag becomes valid among the address data read from each of the tag memory RAM modules 11a, 11b, 11c and 11d.

On the other hand, from each of the cache memory RAM modules 12a, 12b, 12c and 12d, data corresponding to the request address are read based on the input of the request address. Among the read data, only the data read from the cache memory RAM module on the way determined to be valid by the data selector 14 is outputted to the data bus. Also, the outputs of each of the AND circuits 16a, 16b, 16c and 16d are supplied, as cache hit/miss signals, to the processor core or the like.

Next, the function of the time of writing data will be described. When writing data, a request address is written to the tag memory RAM module for an entry selected based on the address of a way, to which the data is to be written, and the data is written to the cache memory RAM module.

However, in the conventional cache memory system having a set associative constitution as stated above, it is necessary to drive the tag memory RAM modules and the cache memory RAM modules on all the ways at the time of reading data from the cache memory. Due to this, the conventional cache memory system has a problem in that more power is required than that of a cache memory system having a 1-way constitution, i.e., a direct mapped cache of the same memory capacity.

Balasubramonian R; et al: "Memory Hierarchy Reconfiguration for Energy and performance in General - Purpose Processor Architectures" Micro-33. Proceedings of the 33rd Annual Acm/ieee International Symposium on Microarchitecture. Monterey, Ca, Dec. 10-13, 2000, Proceedings of the Annual ACM/ieee International Symposium on Micrvarchitecture, Los Alamitos, Ca: leee Comp. Soc. Us (10-12-2000), 245-257 describes conventional microarchitectures which choose a single memory hierarchy, design point targeted at the average application. The paper proposes a cache and TLB layout and design that leverages repeater insertion to provide dynamic low-cost configurability trading off size and speed on a per application phase basis while taking energy consumption into consideration.

The present invention is defined in the attached independent claims to which reference should now be made. Further, preferred features may be found in the sub-claims appended thereto.

An embodiment of this invention aims to provide a cache memory system capable of dynamically switching a mode between a high hit ratio mode with a set associative constitution (n-way set associative architecture) and a low consumption power mode with a direct map constitution (direct mapped architecture).

In the cache memory system of one aspect of the invention, n tag memory RAM sections each capable of switching a state between an ordinary state and a low consumption power state are connected, for example, in parallel, n cache memory RAM sections each capable of switching a state between the ordinary state and the low consumption power state are connected, for example, in parallel, and a RAM section connection structure is dynamically switched between an n-way constitution and a 1-way constitution by a RAM power control unit according to a power mode.

That is to say, if a power mode signal input from outside is in a high hit ratio mode, the cache memory system is controlled, by the RAM power control unit, to have a set associative constitution in which all the tag memory RAM sections and all the cache memory RAM sections are activated in the ordinary state. With this constitution, the data selector selects only data read from the cache memory RAM section corresponding to a way on which the address data read from each of the tag memory RAM section is coincident with the value of a request address supplied from a processor core or the like.

On the other hand, if the power mode signal input from outside is in a low consumption power mode, the cache memory system is controlled, by the RAM power control unit, to have a 1-way direct map constitution in which only one of the tag memory RAM sections and only one of the cache memory RAM sections corresponding to the tag memory RAM section are activated in the ordinary state and the remaining tag memory RAM sections and cache memory RAM sections are turned into the low consumption power state based on the value of the request address supplied from the processor core or the like. With this constitution, the data selector selects only data read from the cache memory RAM section in the ordinary state.

According to this invention, if the power mode signal is in a high hit ratio mode, the cache memory system is activated as a system having an n-way set associative constitution. On the other hand, if the power mode signal is in a low consumption power mode, the cache memory system is activated as a system having a 1-way direct map constitution. It is, therefore, possible to select a case where the performance of the arithmetic processing unit is prioritized even if power consumption is high and a case where low consumption power is prioritized, according to a user or a peripheral environment such as an application in use.

Reference is made, by way of example only, to the accompanying drawings in which:
Fig. 1 is a block diagram showing a conventional cache memory system having a set associative constitution;
Fig. 2 is a block diagram typically showing the important parts of an example of an entire system including a cache memory system according to the first embodiment that realizes the present invention;
Fig. 3 is a block diagram typically showing the important parts of another example of an entire system including a cache memory system according to the first embodiment;
Fig. 4 is a block diagram showing an example of the cache memory system according to the first embodiment;
Fig. 5 is a logic circuit diagram showing an example of the RAM power control device of the cache memory system according to the first embodiment;
Fig. 6 is a logic circuit diagram showing an example of the data selector control circuit of the cache memory system according to the first embodiment;
Fig. 7 is a logic circuit diagram showing an example of the cache hit/miss control circuit of the cache memory system according to the first embodiment;
Fig. 8 is a typical view for describing the concept of the memory regions of the cache memory system according to the first embodiment;
Fig. 9 is a block diagram showing an example of a cache memory system according to the second embodiment that realizes the present invention;
Fig. 10 is a block diagram showing an example of a cache memory system according to the third embodiment that realizes the present invention;
Fig. 11 is a block diagram showing another example of a cache memory system according to the third embodiment;
Fig. 12 is a block diagram showing another example of a cache memory system according to the third embodiment; and
Fig. 13 is a block diagram showing another example of a cache memory system according to the third embodiment.

Embodiments for realizing the present invention will be described hereinafter in detail with reference to the drawings. It is noted that the embodiments will be described while assuming that, though not specially limited thereto, a cache memory system has a 4-way constitution, a cache memory capacity of 16 Kbytes, a cache memory line size of 64 bytes and the number of the entries of each way of 64.

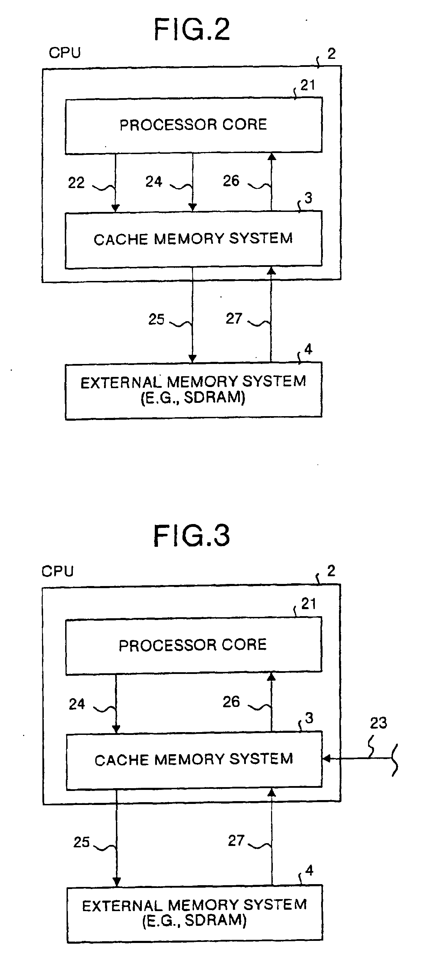

Figs. 2 and 3 are block diagrams typically showing the important parts of an example of an entire system including a cache memory system according to the first embodiment for carrying out the invention. An arithmetic processing unit (CPU) 2 includes therein a processor core 21 and a cache memory system 3 and the unit 2 is connected to an external memory system 4.

In the example shown in Fig. 2, the cache memory system 3 is supplied with a power mode signal 22 from the processor core 21. In case of Fig. 3, by contrast, a cache memory system 3 is supplied with a power mode signal 23 from outside by a user's setting of another system, such as a power supply management system, utilizing an arithmetic processing unit 2, a DIP switch or the like. Here, the power mode signals 22 and 23 are signals indicating that the cache memory system 3 is set to have a set associative constitution or a direct map constitution. In Figs. 2 and 3, reference symbols 24 and 25 denote address signals and reference symbols 26 and 27 denote data.

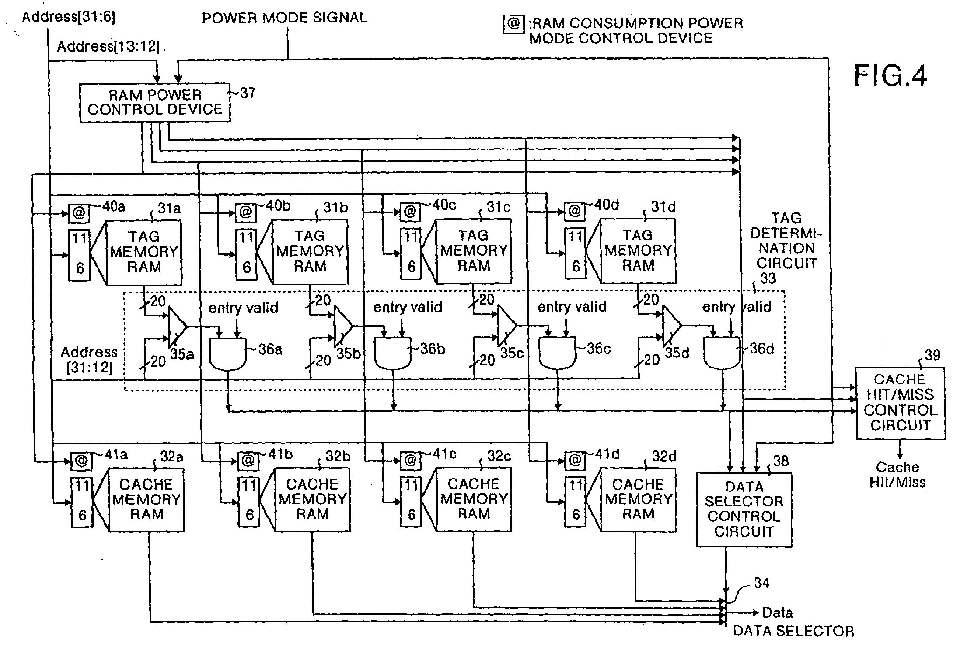

Fig. 4 is a block diagram showing an example of a cache memory system according to the first embodiment for carrying out the present invention. Because of a 4-way constitution, this cache memory system has four tag memory RAM modules 31a, 31b, 31c and 31d connected in parallel and four cache memory RAM modules 32a, 32b, 32c and 32d connected in parallel.

Each of the tag memory RAM modules 31a, 31b, 31c and 31d and the cache memory RAM modules 32a, 32b, 32c and 32d has a function to be turned into a lower consumption power state by a RAM power control device 37 to be described later. This function is realized by consumption power mode control devices 40a, 40b, 40c, 40d, 41a, 41b, 41c and 41d provided for the RAM modules 31a, 31b, 31c, 31d, 32a, 32b, 32b and 32d, respectively. This is the same function as that provided at each of the tag memory RAM modules and cache memory RAM modules of the conventional cache memory system having a set associative constitution.

Further, the cache memory system has a tag determination circuit 33 determining whether or not a request address value requested by the processor core or the like is coincident with address data read from each of the RAM modules 31a, 31b, 31c and 31d. This tag determination circuit 33 consists of four comparators 35a, 35b, 35c and 35d and four AND circuits 36a, 36b, 36c and 36d as in the case of the conventional tag determination circuit.

In addition, the cache memory system has a data selector 34 selecting only valid data from among the data read from each of the cache memory RAM modules 32a, 32b, 32c and 32d, and outputting the selected valid data to a data bus. This data selector 34 is controlled by a data selector control circuit 38 to be described later. The tag determination circuit 33 and the data selector control circuit 38 form a data selector control unit. In addition, the cache memory system has a cache hit/miss control circuit 39, to be described later, for returning cache hit or miss to the processor core or the like which is not shown.

In the first embodiment for carrying out the invention, the constitutions and functions of the tag memory RAM modules 31a, 31b, 31c and 31d, the cache memory RAM modules 32a, 32b, 32c and 32d, the tag determination circuit 33 and the data selector 34 are the same as those of the conventional tag memory RAM modules 11a, 11b, 11c and 11d, the conventional cache memory RAM modules 12a, 12b, 12c and 12d, the conventional tag determination circuit 13 and the conventional data selector 14. No description will be, therefore, given herein. Also, since the consumption power mode control devices 40a, 40b, 40c, 40d, 41a, 41b, 41c and 41d are the same as those of the conventional power consumption mode control devices, no description will be given of these, either.

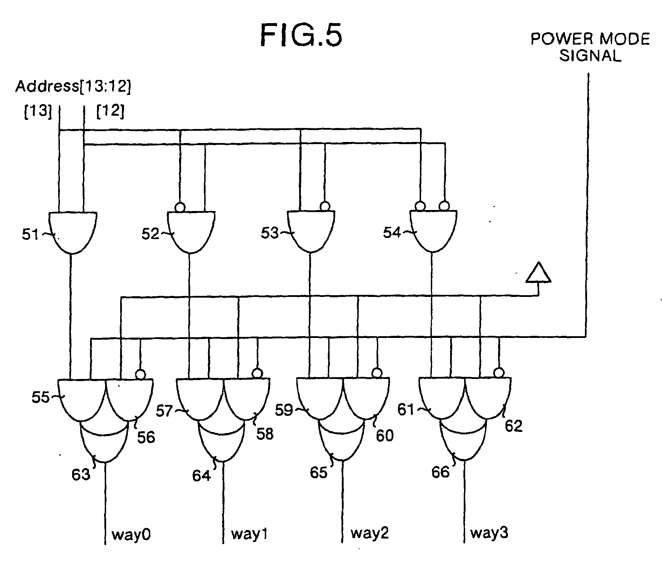

Fig. 5 is a logic circuit diagram showing an example of the RAM power control device 37. The RAM power control device 37 has twelve AND circuits 51 to 62 and four OR circuits 63 to 66.

The AND circuit 51, the AND circuit 52, the AND circuit 53 and the AND circuit 54 are supplied with, as input signals, for example, the thirteenth bit signal and twelfth bit signal among request address signals supplied from the processor core. If both the thirteenth bit signal and the twelfth bit signal are "1", only the AND circuit 51 outputs "1". The terminal of the AND circuit 52 into which the thirteenth bit signal is input, is low active. Due to this, if the thirteenth bit signal is "0" and the twelfth bit signal is "1", only the AND circuit 52 outputs "1".

Further, the terminal of the AND circuit 53 into which the twelfth bit signal is input, is low active. Due to this, if the thirteenth bit signal is "1" and the twelfth bit signal is "0", only the AND circuit 53 outputs "1". Both input terminals of the AND circuit 54 are low active. Due to this, if both the thirteenth bit signal and the twelfth bit signal are "0", only the AND circuit 54 outputs "1". It is noted that in the description of the logic circuit, the value of a signal having a relatively high potential level is "1" and the value of a signal having a relatively low potential level is "0".

The AND circuit 55, AND circuit 57, AND circuit 59 and AND circuit 61 are supplied with, input signals, power mode signals and the output signals of the AND circuit 51, the AND circuit 52, the AND circuit 53 and the AND circuit 54, respectively. If the power mode signal is "1" and the output value of the AND circuit 51 is "1", then the output value of the AND circuit 55 becomes "1". If the power mode signal is "1" and the output value of the AND circuit 52 is "1", then the output value of the AND circuit 57 becomes "1". If the power mode signal is "1" and the output value of the AND circuit 53 is "1", then the output value of the AND circuit 59 becomes "1". If the power mode signal is "1" and the output value of the AND circuit 54 is "1", then the output value of the AND circuit 61 becomes "1". On the other hand, if the power mode signal is "0", all the outputs of the AND circuits 55, 57, 59 and 61 become "0".

The AND circuit 56, AND circuit 58, AND circuit 60 and the AND circuit 62 are supplied with, as input signals, the power mode signal and a high level signal (i.e., "1"). The terminals to which power mode signal is supplied are low active in these AND circuits 56, 58, 60 and 62. Due to this, if the power mode signal is "1", the output values of these AND circuits are "0" and if the power mode signal is "0", the output values thereof are "1".

The OR circuit 63 outputs an OR logic between the output value of the AND circuit 55 and the output value of the AND circuit 56. The OR circuit 64 outputs an OR logic between the output value of the AND circuit 57 and the output value of the AND circuit 58. The OR circuit 65 outputs an OR logic between the output value of the AND circuit 59 and the output value of the AND circuit 60. The OR circuit 66 outputs an OR logic between the output value of the AND circuit 61 and the output value of the AND circuit 62.

The output signal of the OR circuit 63 is, for example, supplied, as a RAM power control signal for a way 0, to the consumption power mode control devices 40a and 41a for controlling the consumption power of the tag memory RAM module 31a and the cache memory RAM module 32a, respectively. Likewise, the output signal of the OR circuit 64 is supplied, as a RAM power control signal for a way 1, to the consumption power mode control device 40b for the tag memory RAM module 31b and the consumption power module control device 41b for the cache memory RAM module 32b.

The output signal of the OR circuit 65 is supplied, as a RAM power control signal for a way 2, to the consumption power mode control device 40c for the tag memory RAM module 31c and the consumption power mode control device 41c for the cache memory RAM module 32c. The output signal of the OR circuit 66 is supplied, as a RAM power control signal for a way 3, to the consumption power mode control device 40d for the tag memory RAM module 31d and the consumption power mode control device 41d for the cache memory RAM module 32d.

Here, if the input RAM power control signal is "1", each of the consumption power mode control devices 40a, 40b, 40c, 40d, 41a, 41b, 41c and 41d activates their corresponding RAM module in an ordinary state. On the other hand, if the RAM power control signal is "0", each of the consumption power mode control devices 40a, 40b, 40c, 40d, 41a, 41b, 41c and 41d places their corresponding RAM modules in a low consumption power state. Accordingly, if the power mode signal is "0", the output values of the AND circuits 56, 58, 60 and 62. are "1" irrespective of the 2-bit value of an input address. Due to this, the output values of the OR circuits 63 to 66, i.e., the values of the RAM power control signals input into the consumption power mode control devices 40a, 40b, 40c, 40d, 41a, 41b, 41c and 41d, become "1".

That is to say, all of the tag memory RAM modules 31a, 31b, 31c and 31d and the cache memory RAM modules 32a, 32b, 32c and 32d are constituted to be activated in an ordinary state and the cache memory system at this time has a set associative constitution.

On the other hand, if the power mode signal is "1", the output value of any one of the AND circuits 51 to 54 becomes "1" based on the 2-bit value of the input address and the output value of any one of the AND circuits 55, 57, 59 and 61 becomes "1" accordingly. Therefore, the output value of any one of the OR circuits 63 to 66 becomes "1", so that only the value of the RAM power control signal supplied to a pair of consumption power mode control devices among the consumption power mode control devices 40a, 40b, 40c and 40d and the corresponding consumption power mode control devices 41a, 41b, 41c and 41d, becomes "0".

In other words, among the tag memory RAM modules 31a, 31b, 31c and 31d and the cache memory RAM modules 32a, 32b, 32c and 32d, only the tag memory RAM module and the cache memory RAM module corresponding to the 2-bit value of the input address are activated in an ordinary state, while the remaining RAM modules are maintained in a low consumption power state. The cache memory system at this time has a direct mapped constitution. It is noted that the constitution of the RAM power control device 37 is not limited to the constitution of the above-stated logic circuit.

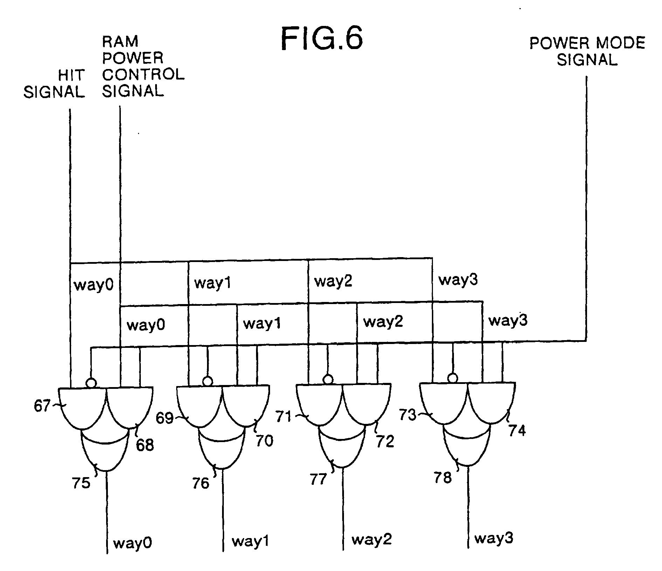

Fig. 6 is a logic circuit diagram showing an example of the data selector control circuit 38. The data selector control circuit 38 has eight AND circuits 67 to 74 and four OR circuits 75 to 78.

The AND circuit 67, AND circuit 69, AND circuit 71 and AND circuit 73 are supplied with, as input signals, power mode signals and the output signals of the AND circuits 36a, 36b, 36c and 36d in the tag determination circuit 33, respectively. The terminals of the AND circuits 67, 69, 71 and 73 into which the power mode signals are input are low active. Due to this, if the power mode signal is "1", the outputs of all the circuits become "0". On the other hand, if the power mode signal is "0", only the output value of the AND circuit on a way on which the output signals of each of the AND circuits 36a, 36b, 36c and 36d in the tag determination circuit 33 becomes "1".

The AND circuit 68, AND circuit 70, AND circuit 72 and AND circuit 74 are supplied with, as input signals, power mode signals and RAM power control signals outputted from the OR circuits 63, 64, 65 and 66 in the RAM power control device 37, respectively. If the power mode signal is "1", only the output value of the AND circuit on the way on which the RAM power control signal is "1", becomes "1". On the other hand, if the power mode signal is "0", the outputs of all the AND circuits become "0".

The OR circuit 75 outputs an OR logic between the output value of the AND circuit 67 and the output value of the AND circuit 68. The OR circuit 76 outputs an OR logic between the output value of the AND circuit 69 and the output value of the AND circuit 70. The OR circuit 77 outputs an OR logic between the output value of the AND circuit 71 and the output value of the AND circuit 72. The OR circuit 78 outputs an OR logic between the output value of the AND circuit 73 and the output value of the AND circuit 74.

The output signals of, for example, the OR circuit 75, the OR circuit 76, the OR circuit 77 and the OR circuit 78 are supplied, as data select signals for selecting one of the data read from each of the cache memory RAM modules 32a, 32b, 32c and 32d on the ways 0, 1, 2 and 3, to the data selector 34.

Therefore, if the power mode signal is "0" (set associative architecture), only the way data among the data read from each of the cache memory RAM modules 32a, 32b, 32c and 32d, on the way for which the request address is determined, by the tag determination circuit 33, to be coincident with valid address data read from each of the tag memory RAM modules 31a, 31b, 31c and 31d, and the data is outputted to the data bus.

If the power mode signal is "1" (direct mapped architecture), only the data among the data read from the one of the cache memory RAM modules 32a, 32b, 32c and 32d activated in an ordinary state by the RAM power control signal, is outputted to the data bus. It is noted that the constitution of the data selector control circuit 38 is not limited to the constitution of the above-stated logic circuit.

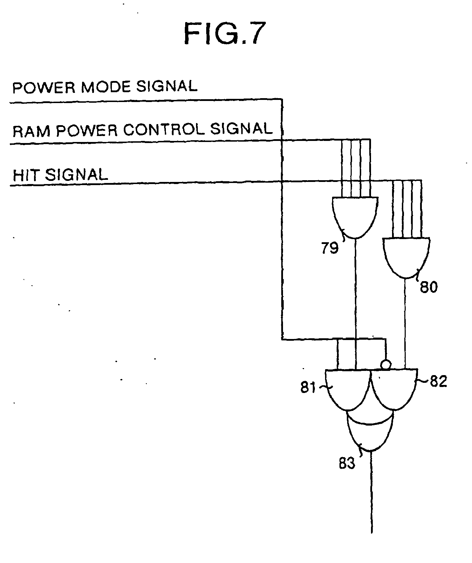

Fig. 7 is a logic circuit diagram showing an example of the cache hit/miss control circuit 39. The cache hit/miss control circuit 39 has four AND circuits 79 to 82 and one OR circuit 83. The AND circuit 81 is supplied with, as input signals, a power mode signal and the output signal of the AND circuit 79 inputting RAM power control signals for each of the ways. The AND circuit 82 is supplied with, as input signals, a power mode signal and the output signal of the AND circuit 80 inputting the output signals of each of the AND circuits 36a, 36b, 36c and 36d in the tag determination circuit 33. The OR circuit 83 outputs an OR logic between the output value of the AND circuit 81 and the output value of the AND circuit 82.

If the power mode signal is "0" (i.e., the cache memory system has a set associative constitution), the output value of the AND circuit 81 becomes "0". In this mode, the terminal of the AND circuit 82 into which the power mode signal is input is low active. Due to this, the output value of the AND circuit 82 is determined by the output value of the AND circuit 80. Accordingly, the output value of the OR circuit 83 which is the output value of the cache hit/miss control circuit 39 is determined by the output value of the tag determination circuit 33. On the other hand, if the power mode signal is "1" (i.e., the cache memory system has a direct map constitution), the output value of the AND circuit 82 becomes "0" but the output value of the AND circuit 81 is determined by the output value of the AND circuit 79. Accordingly, the output value of the cache hit/miss control circuit 39 is determined by the value of the RAM power control signal. It is noted that the constitution of the cache hit/miss control circuit 39 is not limited to the constitution of the above-stated logic circuit.

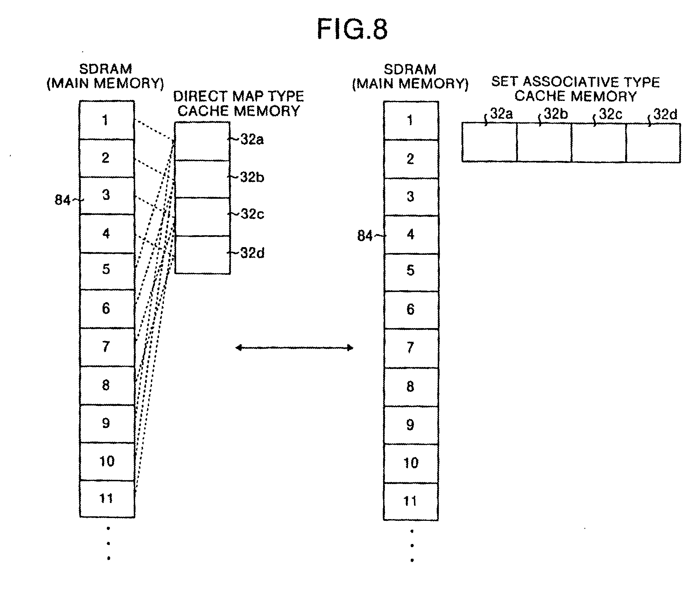

Fig. 8 is a typical view for describing the concept of the memory regions of the cache memory system according to the first embodiment for carrying out the invention. If it is assumed that the main memory 84 of an SDRAM or the like is divided into a plurality of regions and that the cache memory system is activated with a set associative constitution, then the regions of the main memory 84 stored in each of the cache memory RAM modules 32a, 32b, 32c and 32d are the first, second, third regions etc. i.e., all the regions of the main memory 84 are stored (cached).

On the other hand, if the cache memory system is activated with a direct map constitution, the cache memory RAM module 32a, for example, stores (provides a cache for) the first, fifth, ninth, thirteenth regions etc. of the main memory 84. Likewise, the regions of main memory 84 stored in the cache memory RAM module 32b are the second, sixth, tenth, fourteenth regions etc. Those stored in the cache memory RAM module 32c are the third, seventh, eleventh, fifteenth regions etc. Those stored in the cache memory RAM module 32d are the fourth, eighth, twelfth, sixteenth regions etc.

Next, the function of the cache memory system according to the first embodiment for carrying out the invention will be described. If the power mode signal is "0", i.e., the cache memory system is activated with a set associative constitution, then the data read operation and data write operation of the cache memory system are the same as those of the conventional cache memory system of a set associative constitution.

If the power mode signal is "1", i.e., the cache memory system is activated with a direct map constitution, then only one tag memory RAM module and only one cache memory RAM module on any one of the ways are activated in an ordinary state based on, for example, the thirteenth bit and twelfth bit values of an input address in both the data read operation and the data write operation of the cache memory system. As for the remaining three ways, both the tag memory RAM modules and the cache memory RAM modules are turned into a lower consumption power state. When reading data, the data read from the cache memory RAM module in a low consumption power state is determined to be invalid by the data selector 34 based on the RAM power control signal.

According to the first embodiment for carrying out the invention stated above, if the power mode signal is in a high hit ratio mode, the cache memory system is configured as an n-way set associative cache. On the other hand, if the power mode signal is in a low consumption power mode, the cache memory system is configured as a 1-way direct mapped cache. Therefore, it is possible to select a case where the performance of the arithmetic processing unit is prioritized even if consumption power is high and a case where low consumption power is prioritized, according to a user or a peripheral environment such as an application in use.

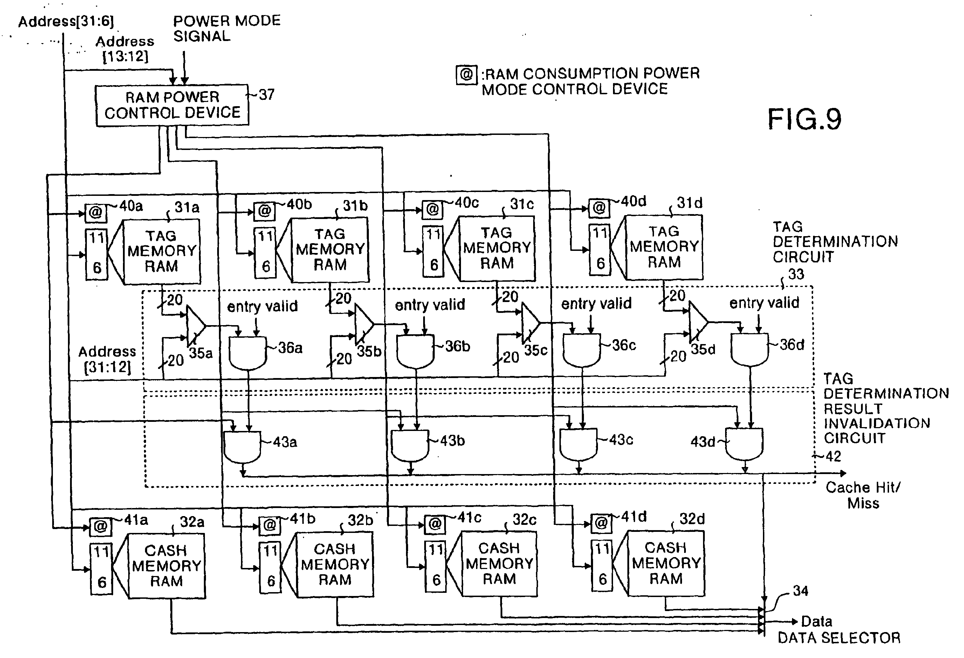

Fig. 9 is a block diagram showing an example of a cache memory system according to the second embodiment for carrying out the present invention. The cache memory system in the second embodiment differs from the cache memory system in the first embodiment (see Fig. 4) as follows. First, a tag determination result invalidation circuit 42 replaces the data selector control circuit 38, and tag data selector control unit is constituted out of a tag determination circuit 33 and the tag determination result invalidation circuit 42.

Second, for the purpose of returning cache hit or miss to a processor core or the like, not shown, the output of the tag determination result invalidation circuit 42 instead of that of the cache hit/miss control circuit 39 is returned. Since the other elements are the same as that of the first embodiment for carrying out the invention, the same constituent elements as those in the first embodiment are denoted by the same reference symbols and will not be described herein.

If the cache memory system is activated with a direct map constitution, the tag determination result invalidation circuit 42 invalidates address data and an entry valid flag read from a tag memory RAM module in a low consumption power state. The tag determination invalidation circuit 42 has four AND circuits 43a, 43b, 43c and 43d. The AND circuit 43a on a way 0 is supplied with a RAM power control signal for the way 0 and the output signal of the AND circuit 36a in the tag determination circuit 33.

Likewise, the AND circuits 43b on a way 1, the AND circuit 43c on a way 2 and the AND circuit 43d on a way 3 are supplied with a RAM power control signal for the way 1 and the output signal of the AND circuit 36b in the tag determination circuit 33, a RAM power control signal for the way 2 and the output signal of the AND circuit 36c in the tag determination circuit 33, and a RAM power control signal for the way 3 and the output signal of the AND circuit 36d in the tag determination circuit 33, respectively.

Next, the function of the cache memory system according to the second embodiment for carrying out the invention will be described. The function is the same as that of the cache memory system according to the first embodiment for carrying out the invention except that if the power mode signal is "1" (direct mapped mode), data read from the cache memory RAM module in a low consumption power state is invalidated by the data selector 34 based on the output signal of the tag determination result invalidation circuit 42 when reading the data.

As before, if the power mode signal is in a high hit ratio mode, the cache memory system is activated as a system having an n-way set associative constitution. On the other hand, if the power mode signal is in a low consumption power mode, the cache memory system is activated as a system having a 1-way direct map constitution. Due to this, it is possible to select between a case where hit rate is prioritized and a case where low consumption power is prioritized, according to a user or a peripheral environment such as an application in use.

The first and second embodiments for carrying out the invention relate to the cache memory system capable of dynamically switching a constitution between the set associative constitution and the direct map constitution using the power mode signal. A cache memory system according to the third embodiment for carrying out the invention, by contrast, has a direct map constitution so as to realize low power consumption without needing a power mode signal. It is noted that the same constituent elements in the third embodiment for carrying out the invention as those in the first or second embodiment for carrying out the invention are denoted by the same reference symbols and will not be described herein.

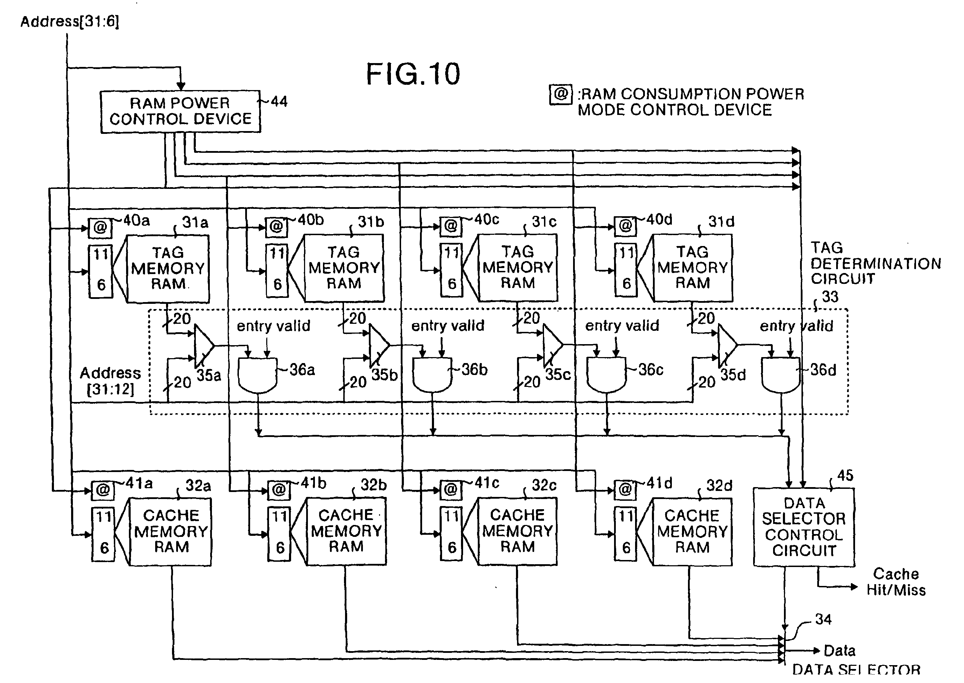

Fig. 10 is a block diagram showing an example of a cache memory system according to the third embodiment for carrying out the invention. This cache memory system is similar to that of Fig. 4, except a RAM power control device 44 and a data selector control circuit 45 do not depend on a power mode signal. Also, the cache memory system is constituted to return cache hit or miss to a processor core or the like without depending on a power mode signal.

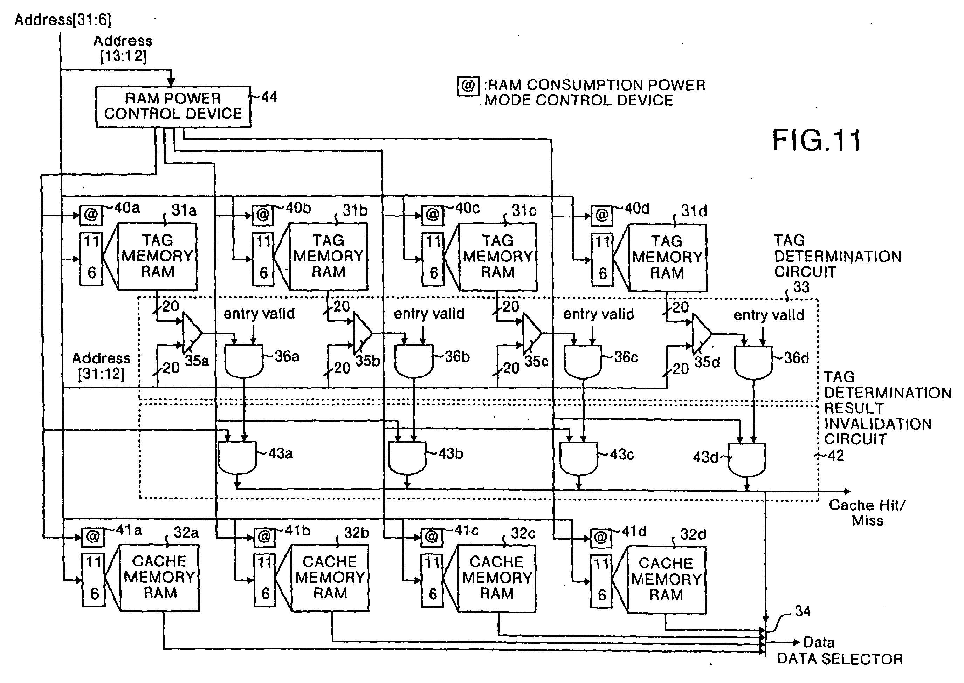

Fig. 11 is a block diagram showing another example of a cache memory system according to the third embodiment for carrying out the invention. This cache memory system is similar to that of Fig. 9, except that a RAM power control device 44 does not depend on a power mode signal.

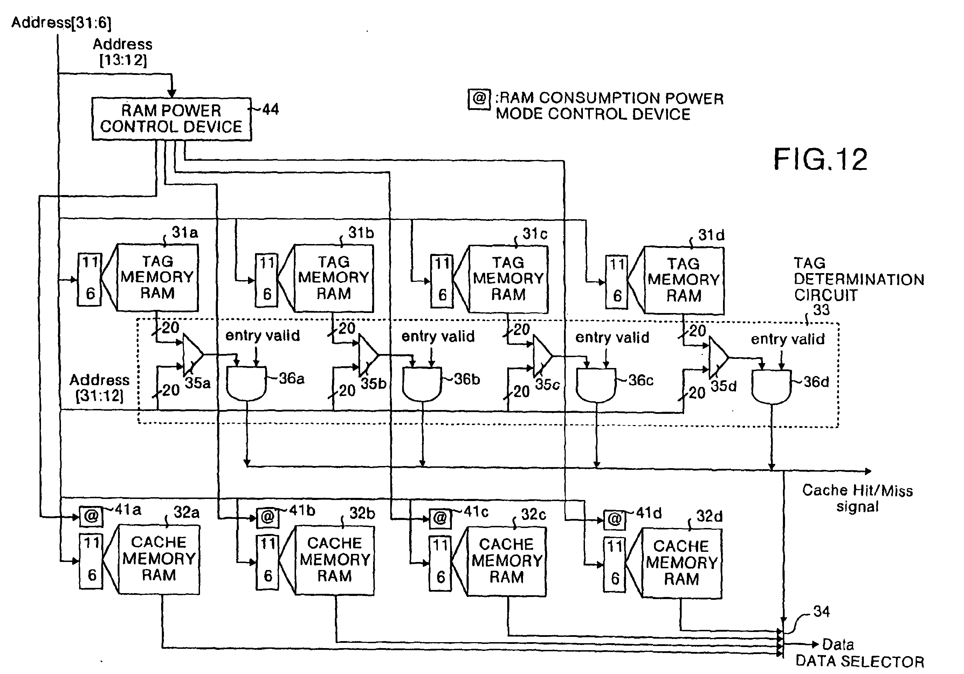

Fig. 12 is a block diagram showing a modified example of the cache memory system shown in Fig. 10. In this cache memory system, only the cache memory RAM modules (not the tag memory RAM modules) can be turned into a lower consumption power state in the cache memory system shown in Fig. 10.

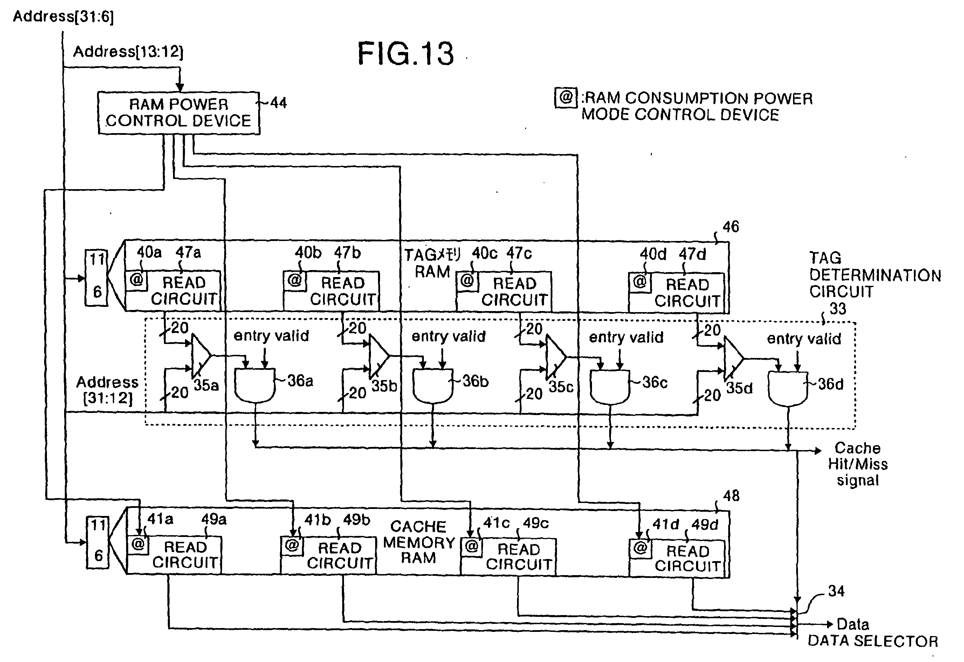

Fig. 13 is a block diagram showing a modified example of the cache memory system shown in Fig. 10. In this cache memory system, a tag memory RAM module 46 and a cache memory RAM module 48 each divided into four regions are provided instead of the four tag memory RAM modules 31a, 31b, 31c and 31d and the four cache memory RAM modules 32a, 32b, 32c and 32d in the cache memory system shown in Fig. 10.

The tag memory RAM module 46 is provided with read circuits 47a, 47b, 47c and 47d in each of the regions. Likewise, the cache memory RAM module 48 is provided with read circuits 49a, 49b, 49c and 49d in each of the regions. The states of these read circuits 47a, 47b, 47c, 47d, 49a, 49b, 49c and 49d are switched between an ordinary state and a low consumption power state by a RAM power control device 44.

According to the third embodiment for carrying out the invention stated above, in any example, only one way is activated in an ordinary state based on the value of the request address and the remaining ways are switched to a low consumption power state. Due to this, it is possible to reduce the consumption power of the cache memory system.

In embodiments of the invention, n tag memory RAM sections each capable of switching a state between an ordinary state and a low consumption power state are connected in parallel; n cache memory RAM sections each capable of switching a state between the ordinary state and the low consumption power state are connected in parallel; if a power mode signal is in a high hit ratio mode, the cache memory system has a set associative constitution, in which all the tag memory RAM sections and all the cache memory RAM sections are activated in the ordinary state; and, on the other hand, if the power mode signal is in a low consumption power mode, the cache memory system has a 1-way direct map constitution, in which only one of the tag memory RAM sections and only one of the cache memory RAM sections corresponding to the tag memory RAM section are activated in the ordinary state and the remaining tag memory RAM sections and cache memory RAM sections are turned into the low consumption power state based on the value of the request address. Due to such an arrangement, if the power mode signal is in a high hit ratio mode, the cache memory system acts as an n-way set associative cache and if the power mode signal is in a low consumption power mode, the cache memory system acts as a 1-way direct mapped cache. It is, therefore, possible to optimize hit rate or power consumption as required.

## Claims

1. A cache memory system comprising:
n tag memory sections (31a, 31b...) where n > 1;
n cache memory sections (32a, 32b...) where n > 1 each capable of switching a state between an ordinary state and a lower power consumption state; **characterised in that** the system comprises
a power control unit (37) which controls in accordance with a power mode signal the switching of a way constitution to either an n-way constitution, in which all the cache memory sections are activated in the ordinary state, or a 1-way constitution, in which only one of the cache memory sections is activated in the ordinary state based on a value of an input request address and the remaining cache memory sections are turned into the low consumption power state;
a data selector (34) which selects only data read from any one of the cache memory sections when reading the data; and a data selector control unit (38) which controls the data selector so as to select only data read from the cache memory section corresponding to the value of the request address in case of the n-way constitution and to select only data read from the cache memory section in the ordinary state in case of the 1-way constitution.

2. The cache memory system according to claim 1, wherein the power control unit (37) is constituted out of a logic circuit generating a signal for controlling an operation state of each of the cache memory sections based on the value of the request address and a value of the power mode signal.

3. A cache memory system according to claim 1 wherein said tag memory sections are capable of switching a state between an ordinary state and a low consumption power state; and wherein
the power control unit (37) controls in accordance with a power mode signal the switching of a way constitution to either an n-way constitution, in which all the tag memory sections and all the cache memory sections are activated in the ordinary state, or a 1-way constitution, in which only one tag memory section and only one cache memory section corresponding to the tag memory section are activated in the ordinary state based on a value of an input request address and the remaining tag memory sections and cache memory sections are turned into the low consumption power state.

4. The cache memory system according to claim 3, wherein the power control unit (37) is constituted out of a logic circuit generating a signal for controlling an operation state of each of the tag memory sections and each of the cache memory sections based on the value of the request address and a value of the power mode signal.

5. The cache memory system according to any preceding claim, further comprising:
a tag determination circuit (33) which determines whether or not the address data read from each of the tag memory sections is coincident with the value of the request address; and
a data selector control circuit (38) which controls so as to select any one of data read from each of the cache memory sections based on a determination result of the tag determination circuit, a value of the power mode signal and
a control content of the power control unit.

6. The cache memory system according to claim 3 or 4, wherein the data selector control unit includes
a tag determination circuit (33) which determines whether or not the address data read from each of the tag memory sections is coincident with the value of the request address; and
a tag determination result invalidation circuit (42) which invalidates a determination result of the tag determination circuit if the address data read from the tag memory section in the low consumption power state is coincident with the value of the request address.

7. The cache memory system according to any preceding claim, wherein the n cache memory sections correspond to individual n regions divided from one module.

8. The cache memory system according to any preceding claim, wherein the n tag memory sections correspond to individual n regions divided from one module.

9. A cache memory system according to claim 1, comprising switchable-architecture cache memory comprising:
n tag memory RAM sections, and associated n cache memory RAM sections, either the tag memory RAM sections or the cache memory RAM sections, or both, being capable of switching between an ordinary state and a low consumption power state;
and a RAM power control unit responsive to a power mode signal such that, if the power mode signal is in a high hit rate mode, the cache memory system is configured by said RAM power control unit into a set associative architecture, in which all the tag memory RAM sections and all the cache memory RAM sections are activated in the ordinary state; whereas, if the power mode signal is in a low consumption power mode, the cache memory system is configured by said RAM power control unit into a 1-way direct mapped architecture, in which one of the tag memory RAM sections and its associated cache memory RAM section are activated in the ordinary state based on the value of a requested address and the remaining tag memory RAM sections and/or the remaining cache memory RAM sections are held in the low consumption power state.

## Patentansprüche

1. Ein Cachespeichersystem, umfassend:
n Tag-Speicherabschnitte (31a, 31b...), wo n > 1 ist;
n Cachespeicherabschnitte (32a, 32b...), wo n > 1 ist, wobei jeder in der Lage ist, einen Zustand zwischen einem normalen Zustand und einem Zustand mit niedrigerer Leistungsaufnahme umzuschalten; **dadurch gekennzeichnet, dass** das System umfasst:
eine Leistungssteuereinheit (37), welche gemäß einem Leistungsmodussignal das Schalten einer Wegstruktur steuert auf entweder eine n-Weg Struktur, in welcher all die Cachespeicherabschnitte im normalen Zustand aktiviert sind, oder eine 1-Weg Struktur, in welcher nur einer der Cachespeicherabschnitte im normalen Zustand aktiviert ist, basierend auf einem Wert einer Eingangsabrufadresse, und
die restlichen Cachespeicherabschnitte in den Zustand mit niedriger Leistungsaufnahme umgewandelt sind;
einen Datenselektor (34), der nur Daten auswählt, die von irgendeinem der Cachespeicherabschnitte gelesen wurden, wenn die Daten gelesen werden; und eine Datenselektorsteuereinheit (38), welche den Datenselektor steuert, um nur Daten auszuwählen, die von dem Cachespeicherabschnitt gelesen wurden, der dem Wert der Abrufadresse entspricht, im Falle der n-Weg Struktur, und um nur Daten auszuwählen, die von dem Cachespeicherabschnitt in dem normalen Zustand gelesen wurden, im Falle der 1-Weg Struktur.

2. Das Cachespeichersystem nach Anspruch 1, wobei die Leistungssteuereinheit (37) aus einer logischen Schaltung gebildet ist, die ein Signal zum Steuern eines Betriebszustands jeder der Cachespeicherabschnitte erzeugt, basierend auf dem Wert der Abrufadresse und einem Wert des Leistungsmodussignals.

3. Ein Cachespeichersystem nach Anspruch 1, wobei die Tag-Speicherabschnitte in der Lage sind, einen Zustand zwischen einem normalen Zustand und einem Zustand mit niedriger Leistungsaufnahme umzuschalten; und wobei
die Leistungssteuereinheit (37) gemäß einem Leistungsmodussignal das Schalten einer Wegstruktur steuert auf entweder eine n-Weg Struktur, in welcher all die Tag-Speicherabschnitte und all die Cachespeicherabschnitte im normalen Zustand aktiviert sind, oder eine 1-Weg Struktur, in welcher nur ein Tag-Speicherabschnitt und nur ein Cachespeicherabschnitt, der dem Tag-Speicherabschnitt entspricht, im normalen Zustand aktiviert sind, basierend auf einem Wert einer Eingangsabrufadresse, und die restlichen Tag-Speicherabschnitte und Cachespeicherabschnitte in den Zustand mit niedriger Leistungsaufnahme umgewandelt sind.

4. Das Cachespeichersystem nach Anspruch 3, wobei die Leistungssteuereinheit (37) aus einer logischen Schaltung gebildet ist, die ein Signal zum Steuern eines Betriebszustands jeder der Tag-Speicherabschnitte und jeder der Cachespeicherabschnitte erzeugt, basierend auf dem Wert der Abrufadresse und einem Wert des Leistungsmodussignals.

5. Das Cachespeichersystem nach einem der vorhergehenden Ansprüche, des Weiteren umfassend:
eine Tag-Bestimmungsschaltung (33), welche bestimmt, ob die Adressdaten, welche von jedem der Tag-Speicherabschnitte gelesen wurden, mit dem Wert der Abrufadresse übereinstimmen oder nicht; und
eine Datenselektorsteuerschaltung (38), welche so steuert, um irgendwelche der Daten auszuwählen, die von jedem der Cachespeicherabschnitte gelesen wurden, basierend auf einem Bestimmungsergebnis der Tag-Bestimmungsschaltung, einem Wert des Leistungsmodussignals und einem Steuerinhalt der Leistungssteuereinheit.

6. Das Cachespeichersystem nach Anspruch 3 oder 4, wobei die Datenselektorsteuereinheit umfasst:
eine Tag-Bestimmungsschaltung (33), welche bestimmt, ob die Adressdaten, die von jedem der Tag-Speicherabschnitte gelesen wurden, mit dem Wert der Abrufadresse übereinstimmen oder nicht; und
eine Tag-Bestimmungsergebnisentwertungsschaltung (42), welche ein Bestimmungsergebnis der Tag-Bestimmungsschaltung entwertet, falls die Adressdaten, welche von dem Tag-Speicherabschnitt in dem Zustand mit niedriger Leistungsaufnahme gelesen wurden, mit dem Wert der Abrufadresse übereinstimmen.

7. Das Cachespeichersystem nach einem der vorhergehenden Ansprüche, wobei die n Cachespeicherabschnitte einzelnen n Bereichen entsprechen, die aus einem Modul herausgeteilt sind.

8. Das Cachespeichersystem nach einem der vorhergehenden Ansprüche, wobei die n Tag-Speicherabschnitte einzelnen n Bereichen entsprechen, die aus einem Modul herausgeteilt sind.

9. Ein Cachespeichersystem nach Anspruch 1, umfassend einen Cachespeicher mit schaltbarer Architektur, umfassend:
n Tag-Speicher RAM Abschnitte und zugehörige n Cachespeicher RAM Abschnitt, wobei entweder die Tag-Speicher RAM Abschnitte oder die Cachespeicher RAM Abschnitte, oder beide, in der Lage sind, zwischen einem normalen Zustand und einem Zustand mit niedriger Leistungsaufnahme umzuschalten;
und eine RAM Leistungssteuereinheit, die auf ein Leistungsmodussignal so reagiert, dass, falls das Leistungsmodussignal in einem Modus mit hoher Trefferrate ist, das Cachespeichersystem durch die RAM Leistungssteuereinheit in eine bestimmte zugehörige Architektur konfiguriert wird, in welcher all die Tag-Speicher RAM Abschnitte und all die Cachespeicher RAM Abschnitte im normalen Zustand aktiviert sind; wohingegen, falls das Leistungsmodussignal in einem Modus niedriger Leistungsaufnahme ist, das Cachespeichersystem durch die RAM Leistungssteuereinheit in eine direkt abbildende 1-Weg Architektur konfiguriert wird, in welcher einer der Tag-Speicher RAM Abschnitte und sein zugehöriger Cachespeicher RAM Abschnitt im normalen Zustand aktiviert sind, basierend auf dem Wert einer abgerufenen Adresse, und die restlichen Tag-Speicher RAM Abschnitte und/oder die restlichen Cache-Speicher RAM Abschnitte in dem Zustand mit niedriger Leistungsaufnahme gehalten werden.

## Revendications

1. Système d'antémémoire comprenant :
n sections de mémoire d'étiquettes (31a, 31b...) où n>1 ;
n sections d'antémémoire (32a, 32b...) où n > 1, capables chacune de commuter un état entre un état ordinaire et un état de faible consommation électrique ; **caractérisé en ce que** le système comprend :
une unité de régulation de puissance (37) qui commande selon un signal de mode d'alimentation la commutation d'une constitution de direction entre une constitution à n directions, dans laquelle toutes les sections d'antémémoire sont activées dans l'état ordinaire, et une constitution unidirectionnelle, dans laquelle une seule des sections d'antémémoire est activée dans l'état ordinaire selon une valeur d'une adresse de requête d'entrée et les sections d'antémémoire restantes passent à l'état de faible consommation électrique ;
un sélecteur de données (34) qui sélectionne uniquement des données lues à partir de l'une quelconque des sections d'antémémoire lors de la lecture des données ; et
une unité de commande de sélecteur de données (38) qui commande le sélecteur de données pour qu'il sélectionne uniquement des données lues à partir de la section d'antémémoire correspondant à la valeur de l'adresse de requête dans le cas de la constitution à n directions et pour qu il sélectionne uniquement des données lues à partir de la section d'antémémoire dans l'état ordinaire dans le cas de la constitution unidirectionnelle.

2. Système d'antémémoire selon la revendication 1, dans lequel l'unité de régulation de puissance (37) est constituée par un circuit logique générant un signal pour commander un état de fonctionnement de chacune des sections d'antémémoire selon la valeur de l'adresse de requête et une valeur du signal de mode d'alimentation.

3. Système d'antémémoire selon la revendication 1, dans lequel lesdites sections de mémoire d'étiquettes sont capables de commuter un état entre un état ordinaire et un état de faible consommation électrique ; et dans lequel
l'unité de régulation de puissance (37) commande selon un signal de mode d'alimentation la commutation d'une constitution de direction entre une constitution à n directions, dans laquelle toutes les sections de mémoire d'étiquettes et toutes les sections d'antémémoire sont activées dans l'état ordinaire, et une constitution unidirectionnelle, dans laquelle une seule section de mémoire d'étiquettes et une seule section d'antémémoire correspondant à la section de mémoire d'étiquettes est activée dans l'état ordinaire selon une valeur d'une adresse de requête d'entrée et les sections de mémoire d'étiquettes et sections d'antémémoire restantes passent à l'état de faible consommation électrique.

4. Système d'antémémoire selon la revendication 3, dans lequel l'unité de régulation de puissance (37) est constituée par un circuit logique générant un signal pour commander un état de fonctionnement de chacune des sections de mémoire d'étiquettes et de chacune des sections d'antémémoire selon la valeur de l'adresse de requête et une valeur du signal de mode d'alimentation.

5. Système d'antémémoire selon l'une quelconque des revendications précédentes, comprenant en outre :
un circuit de détermination d'étiquette (33) qui détermine si les données d'adresse lues à partir de chacune des sections de mémoire d'étiquettes coïncident ou non avec la valeur de l'adresse de requête ; et
un circuit de commande de sélecteur de données (38) qui commande le sélecteur de données pour qu'il sélectionne toutes les données lues à partir de chacune des sections d'antémémoire selon un résultat de détermination du circuit de détermination d'étiquette, une valeur du signal de mode d'alimentation et un contenu de contrôle de l'unité de régulation de puissance.

6. Système d'antémémoire selon la revendication 3 ou 4, dans lequel l'unité de commande de sélecteur de données comprend :
un circuit de détermination d'étiquette (33) qui détermine si les données d'adresse lues à partir de chacune des sections de mémoire d'étiquettes coïncident ou non avec la valeur de l'adresse de requête ; et
un circuit d'invalidation de résultat de détermination d'étiquette (42) qui invalide un résultat de détermination du circuit de détermination d'étiquette si les données d'adresse lues à partir de la section de mémoire d'étiquettes dans l'état de faible consommation électrique coïncident avec la valeur de l'adresse de requête.

7. Système d'antémémoire selon l'une quelconque des revendications précédentes, dans lequel les n sections d'antémémoire correspondent à n régions individuelles divisées à partir d'un module.

8. Système d'antémémoire selon l'une quelconque des revendications précédentes, dans lequel les n sections de mémoire d'étiquettes correspondent à n régions individuelles divisées à partir d'un module.

9. Système d'antémémoire selon la revendication 1, comprenant une antémémoire à architecture commutable comprenant :
n sections RAM de mémoire d'étiquettes, et n sections RAM d'antémémoire associées, les sections RAM de mémoire d'étiquettes ou les sections RAM d'antémémoire, ou les deux, étant capables de commuter entre un état ordinaire et un état de faible consommation électrique ;
et une unité de régulation de puissance RAM réactive à un signal de mode d'alimentation de sorte que, si le signal de mode d'alimentation est dans un mode de taux d'occurences élevé, le système d'antémémoire est configuré par ladite unité de régulation de puissance RAM en une architecture associative déterminée, dans laquelle toutes les sections RAM de mémoire d'étiquettes et toutes les sections RAM d'antémémoire sont activées dans l'état ordinaire ; tandis que, si le signal de mode d'alimentation est dans un mode de faible consommation électrique, le système d'antémémoire est configuré par ladite unité de régulation de puissance RAM en une architecture mappée directe unidirectionnelle, dans laquelle une des sections RAM de mémoire d'étiquettes et sa section RAM d'antémémoire associée sont activées dans l'état ordinaire selon la valeur d'une adresse demandée et les sections RAM de mémoire d'étiquettes restantes et/ou les sections RAM d'antémémoire restantes sont maintenues dans l'état de faible consommation électrique.
